# EUROPÄISCHE PATENTANMELDUNG

(11) **EP 3 865 718 A1**
(43) Veröffentlichungstag der Anmeldung: **18.08.2021**
(21) Anmeldenummer: 21154518.1
(22) Anmeldetag: 01.02.2021
(51) Int. Cl.: F16B 31/02, F16B 13/06, F16B 39/26

(54) **BEFESTIGUNGSELEMENT UND BEFESTIGUNGSANORDNUNG**

(30) Priorität: 12.02.2020 DE 102020103588; 16.12.2020 DE 102020133647
(71) Anmelder: fischerwerke GmbH & Co. KG, 72178 Waldachtal (DE)
(72) Erfinder: Hirschle, Tobias, 71131 Jettingen (DE); Linka, Martin, 72160 Horb a.N. (DE); Wälder, Jonas, 71069 Sindelfingen (DE)
(74) Vertreter: Suchy, Ulrich Johannes

(57) **Zusammenfassung**

Zum Setzen eines Spreizankers schlägt die Erfindung eine kuppelartig gewölbte Lochscheibe (2) mit einem ein Loch (4) der Lochscheibe (2) umschließenden Kragen (10) als Auflager (11) für einen Schraubenkopf (15) des Spreizankers als Teil eines Befestigungselements (1) vor.

## Beschreibung

Die Erfindung betrifft ein Befestigungselement mit den Merkmalen des Oberbegriffs des Anspruchs 1 und eine Befestigungsanordnung mit den Merkmalen des Oberbegriffs des Anspruchs 8.

Das Verankern eines Spreizankers in einem Ankerloch in einem Ankergrund erfolgt durch Aufbringen einer Axialkraft auf einen Ankerschaft, wodurch der Spreizanker im Ankerloch aufgespreizt und dadurch im Ankergrund verankert wird. Wird die Axialkraft über eine Schraubverbindung erzeugt, kann ein Drehmoment gemessen werden, das wegen der Reibung jedoch nur ein ungefähres Maß für die Axialkraft ist.

Die Patentanmeldung US 2008/0138167 A1 offenbart einen Spannkraftindikator, bei dem es sich um eine hohlkegelstumpfförmige Lochscheibe handelt. Die Lochscheibe weist mit etwas Abstand von einem Lochrand geprägte Sicken auf, die um den Lochrand herum angeordnet sind. Die Sicken stehen von einer Außenseite der Lochscheibe ab und sind auf einer Innenseite der Lochscheibe hohl und mit einer Indikatormasse gefüllt. Die Sicken sind so niedrig und so weit vom Lochrand entfernt angeordnet, dass ein Schraubenkopf bei unverformter Lochscheibe auf dem Lochrand und nicht auf den Sicken aufsitzt. Wird die Lochscheibe axial zusammengedrückt, gelangt der Schraubenkopf auf die Sicken und drückt sie flach, wenn die Lochscheibe auf einer Unterlage aufliegt. Dabei wird die Indikatormasse ausgedrückt und dient als Indikator für eine axiale Spannkraft, wenn sie an einem Außenrand der Lochscheibe hervortritt.

Aufgabe der Erfindung ist, ein Befestigungselement und eine Befestigungsanordnung mit einer alternativen Lochscheibe als Spannkraftindikator vorzuschlagen.

Diese Aufgabe wird erfindungsgemäß durch die Merkmale der Ansprüche 1 und 8 gelöst. Das erfindungsgemäße Befestigungselement mit den Merkmalen des Anspruchs 1 weist einen Schaft, der sich entlang einer Längsachse des Befestigungselements erstreckt, eine gewölbte Lochscheibe, deren Loch von dem Schaft in Richtung der Längsachse durchgriffen wird, und ein Spannelement, das auf einer Außenseite der Lochscheibe an dem Schaft angeordnet und zu einem Aufbringen einer axialen Spannkraft in einer Achsrichtung des Schafts beweglich ist, auf. Das Spannelement kann in Bezug auf den Schaft oder gemeinsam mit dem Schaft in dessen Achsrichtung beweglich sein. Insbesondere ist das Spannelement eine Mutter oder ein Schraubenkopf. Das Spannelement ist bezüglich der Lochscheibe drehbar und nicht drehfest mit ihr verbunden.

Die Lochscheibe weist einen gewölbten Grundkörper auf, womit eine kegelstumpfförmige oder kuppelartige Wölbung gemeint ist. Unter "gewölbt" soll hier auch eine Kegelform oder die Form eines Kegelstumpfs verstanden werden, also allgemein ein räumlich gebogener Körper. Insbesondere ist ein "gewölbter" Grundkörper im Sinne der Erfindung ein Grundkörper, dessen Außenseite in Umfangsrichtung wie auch in Richtung seiner Höhe gekrümmt ist, und dessen Mantellinie im Schnitt von einem Kegelstumpf oder einem Kegel abweicht. Insbesondere ist der Grundkörper dreidimensional kuppelartig gewölbt, in der Art eines um die Achsrichtung rotierenden gekrümmten Bogens. Die Außenseite ist die dem Spannelement zugewandte Seite, die bei einer gekrümmt gewölbten Scheibe konvex ist.

Erfindungsgemäß weist der Grundkörper der Lochscheibe ein Auflager für das Spannelement auf, auf dem das Spannelement aufliegt, wenn es die axiale Spannkraft auf die Lochscheibe ausübt. Das Auflager weist insbesondere eine kreisringförmige Auflagerfläche für das Spannelement auf und bildet somit kein linienförmiges sondern ein flächiges Auflager, wodurch ein lokales Einschneiden und Spannungsspitzen reduziert werden. Das Spannelement kann unmittelbar oder mittelbar beispielsweise über eine Unterlegscheibe auf dem Auflager aufliegen. Dabei liegt das Spannelement während des gesamten Spannvorgangs, bei dem die Lochscheibe axial zusammengedrückt wird, ausschließlich auf dem Auflager und nicht radial außerhalb des Auflagers auf der Außenseite des Grundkörpers der Lochscheibe auf. Das gilt jedenfalls so lange bis eine vorgegebene maximale axiale Spannkraft nicht überschritten ist, mit der das Befestigungselement planmäßig gespannt werden soll oder darf. Hierdurch ist gewährleistet, dass die Spannkraft während des Spannvorgangs vom Spannelement in die Lochscheibe definiert und ausschließlich am Auflager eingetragen wird. Durch die erfindungsgemäße Ausbildung ist gewährleistet, dass bei einem axialen Zusammendrücken der Lochscheibe zunächst ein Kraftanstieg erfolgt, der bei einer zunehmenden Abplattung der Lochscheibe ein Plateau erreicht oder abfällt, bevor er wieder ansteigt, wenn die Lochscheibe im Wesentlichen eben gedrückt ist.

Vorzugsweise befindet sich das Auflager ohne radialen Abstand an einem Lochrand des Lochs der Lochscheibe.

Als Auflager sieht eine Ausgestaltung der Erfindung einen das Loch der Lochscheibe umschließenden und axial von der Außenseite des Grundkörpers abstehenden Kragen vor. Insbesondere ist der Kragen ringartig in Umfangsrichtung geschlossen, Insbesondere weist der Kragen auf seiner dem Grundkörper abgewandten Seite eine kreisringförmige Auflagerfläche auf Der Kragen kann beispielsweise ein umlaufender Wulst oder Ring sein, der vorzugsweise einstückiger Bestandteil der Lochscheibe ist.

Eine andere Ausgestaltung der Erfindung sieht vor, dass eine Wölbung der Lochscheibe in einem das Loch umschließenden Bereich in eine Gegenwölbung, also eine Wölbung mit entgegengesetzter Krümmung übergeht, wobei die das Loch umschließende Gegenwölbung das Auflager für das Spannelement bildet. Insbesondere ist im Bereich der Gegenwölbung ein zwischen einer an die Außenseite der Lochscheibe angelegten Tangente und der Längsachse eingeschlossener Winkel kleiner als im Bereich der Wölbung.

Noch eine andere Ausgestaltung der Erfindung sieht vor, dass, ausgehend von dem Lochrand, die Lochscheibe radial nach außen, also von der Längsachse weg, zunächst einen kleineren Wölbungsradius und mit größerem oder zunehmendem radialem Abstand vom Lochrand einen größeren Wölbungsradius aufweist. Beispielsweise kann sich der Wölbungsradius vom Lochrand radial nach außen stetig vergrößern, jedenfalls in dem Bereich, der beim axialen Zusammendrücken der Lochscheibe mit dem Spannelement in Berührung kommt.

Eine Ausgestaltung der Erfindung sieht vor, dass die Lochscheibe beziehungsweise ihr Grundkörper die Form einer Schicht eines Hohlkörpers aufweist. Das bedeutet, dass sich ein äußerer Scheibenrand in einer zu dem Lochrand parallelen Ebene befindet, und sich die Lochscheibe vom Loch zum äußeren Scheibenrand aufweitet. Beispielsweise hat die Lochscheibe die Form einer Schicht eines Rotationshohlkörpers, wie beispielsweise eine Hohlkugelschicht oder eine Schicht eines hohlen Rotationsellipsoids, wobei der Hohlkörper zusätzlich in einer radialen Querrichtung zusammengedrückt und in einer dazu senkrechten radialen Längsrichtung gestreckt sein kann. In diesem Fall ist der Hohlkörper kein Rotationshohlkörper.

Bei einer bevorzugten Ausgestaltung der Erfindung weist das Befestigungselement einen Spreizanker auf, der zum Verankern des Befestigungselements in einem Bohrloch aufspreizbar ist. Derartige Befestigungselemente sind allgemein als Spreizanker, beispielsweise als Bolzen- oder Hülsenanker bekannt.

Ein erfindungsgemäßes Befestigungselement mit einem Spreizanker bildet mit einem Ankergrund eine Befestigungsanordnung. Der Spreizanker ist bei der erfindungsgemäßen Befestigungsanordnung in einem Ankerloch in einem Ankergrund verankert. Der Ankergrund besteht beispielsweise aus Beton, Stein oder Mauerwerk und das Ankerloch ist beispielsweise in den Ankergrund gebohrt. Zum Verankern wird der Spreizanker im Ankergrund aufgespreizt, wozu eine axiale Spannkraft auf den Ankerschaft ausgeübt wird. Die Spannkraft wird über das Spannelement des erfindungsgemäßen Befestigungselements auf die Lochscheibe abgetragen, das sich mit seinem Außenrand unmittelbar oder mittelbar am Ankergrund oder über ein Anbauteil am Ankergrund abstützt. Das Spannelement ist insbesondere ein mit dem Ankerschaft einstückig oder starr verbundener Schraubenkopf oder eine Mutter, die auf ein Gewinde des Ankerschafts geschraubt ist. Die axiale Spannkraft wird durch Drehen des Schraubenkopfs oder der Mutter erzeugt und drückt die Lochscheibe, die zwischen dem Spannelement und dem Ankergrund eingespannt ist, axial zusammen. Dabei liegt das Spannelement mittelbar oder unmittelbar, insbesondere also der Schraubenkopf oder die Mutter unmittelbar, ausschließlich auf dem Auflager der Lochscheibe und nicht außerhalb des Auflagers auf der Außenseite des Grundkörpers der Lochscheibe auf. Das gilt jedenfalls so lange, bis die festgelegte aufzubringende axiale Spannkraft nicht überschritten ist, also die Spannkraft, die für ein planmäßiges Aufspreizen des Spreizankers notwendig ist und die zwischen einer minimal notwendigen und einer maximal zulässigen Spannkraft liegt.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des oder der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiterer Ausführungsbeispiele aufweisen, sind möglich.

Die Erfindung wird nachfolgend anhand von Ausführungsbeispielen näher erläutert, die in der Zeichnung dargestellt sind. Es zeigen:
- Figur 1: einen Achsschnitt eines ersten Ausführungsbeispiels einer erfindungsgemäßen Befestigungsanordnung mit einem erfindungsgemäßen Befestigungselement;
- Figur 2: eine vergrößerte Einzelheit gemäß Kreis II in Figur 1;
- Figur 3: eine perspektivische Darstellung einer Lochscheibe des erfindungsgemäßen Befestigungselements aus Figur 1;
- Figur 4: einen Achsschnitt einer zweiten Ausführungsform der Lochscheibe des erfindungsgemäßen Befestigungselements aus Figur 1;
- Figur 5: einen Achsschnitt einer dritten Ausführungsform der Lochscheibe des erfindungsgemäßen Befestigungselements aus Figur 1; und
- Figur 6: ein Spannkraftdiagramm eines erfindungsgemäßen Befestigungselements.

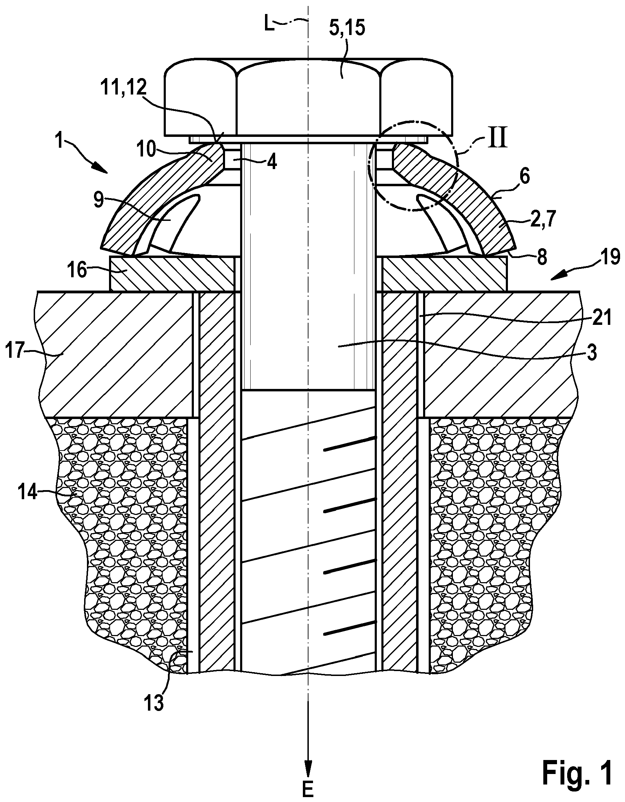

Das in Figur 1 dargestellte, erfindungsgemäße Befestigungselement 1 weist eine gewölbte Lochscheibe 2, einen Schaft 3 und ein an dem Schaft 3 angeordnetes Spannelement 5 auf, das auf einer Außenseite 6 der Lochscheibe 2 angeordnet ist. Als "Außenseite" 6 wird hier die im Ausführungsbeispiel konvexe Seite der Lochscheibe 2 bezeichnet, die entgegen der Einbringrichtung E nach hinten zeigt. Der Schaft 3 erstreckt sich entlang einer Längsachse L des Befestigungselements 1 und durchgreift in Richtung der Längsachse ein Loch 4 der Lochscheibe 2. Die "Einbringrichtung" E verläuft parallel zur Längsachse L und ist die Richtung, in die das Befestigungselement 1 planmäßig in ein Ankerloch 13 im Ankergrund 14 eingebracht wird.

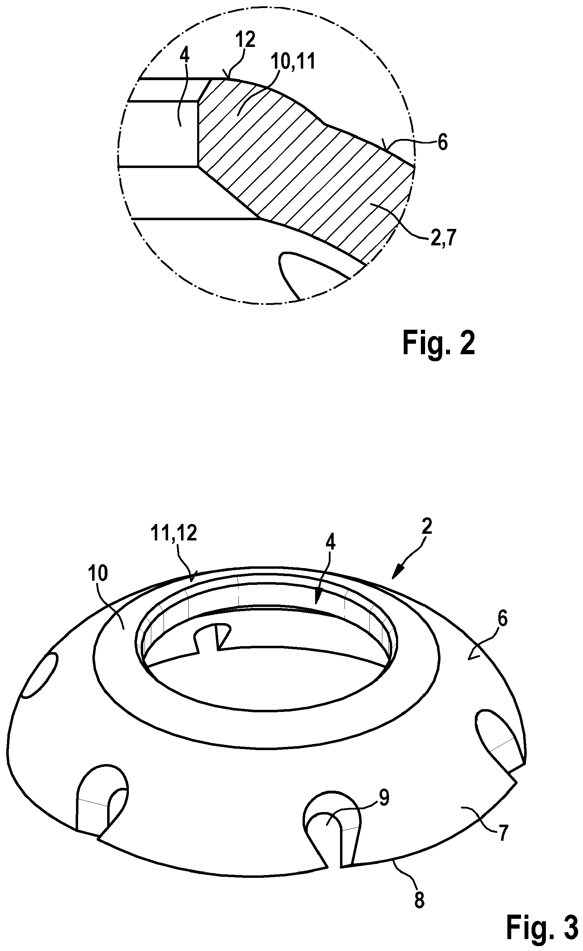

Die Lochscheibe 2, die in Figur 3 als Einzelteil gezeichnet ist, weist einen zweidimensional gewölbten Grundkörper 7 auf, wobei mit "zweidimensional gewölbt" hier eine kuppelartig gekrümmte Wölbung gemeint ist. Im Ausführungsbeispiel hat die Lochscheibe 2 die Form einer Schicht eines Hohlrotationsellipsoids oder einer Schicht einer Hohlkugel, wobei "Schicht" einen ringförmigen Abschnitt eines Hohlkörpers zwischen zwei parallelen Schnittflächen des Hohlkörpers bedeutet.

An einem Außenrand 8 weist die Lochscheibe 2 mehrere über den Umfang verteilte Ωförmige Aussparungen 9 auf.

An einem Lochrand weist der Grundkörper 7 der Lochscheibe 2 einen Kragen 10 in Form eines das Loch 4 umschließenden Wulstes auf, der ein von der Außenseite 6 des Grundkörpers 7 abstehendes Auflager 11 für das Spannelement 5 bildet. Die Form des das Auflager 11 bildenden Kragens 10 ist in der Vergrößerung der Figur 2 zu sehen. Er weist im Ausführungsbeispiel eine vom Lochrand radial nach außen bogenförmig axial in Richtung der Außenseite des Grundkörpers 7 abfallende Auflagerfläche 12 auf. Die genaue Form des Auflagers 11 ist nicht zwingend für die Erfindung.

Im Ausführungsbeispiel ist der Schaft 3, der das Loch 4 der Lochscheibe 2 durchgreift, ein Ankerschaft eines im Übrigen nicht dargestellten herkömmlichen Spreizankers, der in einem zylindrischen Ankerloch 13 verankert ist, das in einen Ankergrund 14 aus beispielsweise Beton gebohrt ist. Im Ausführungsbeispiel ist der Schaft 3 ein Schraubenschaft einer Schraube, die in einen nicht gezeichneten, konischen Spreizkörper geschraubt ist, der durch eine Spannkraft in einer Achsrichtung des Schafts 3 in eine ebenfalls nicht dargestellte Spreizhülse des Spreizankers, hier eines herkömmlichen Hülsenankers, eingezogen wird und diese aufspreizt, so dass der Spreizanker im Ankergrund 14 verankert ist. Die axiale Spannkraft wird durch Drehen der Schraube erzeugt. Anstelle der Schraube kann der Spreizanker auch einen Ankerschaft mit einem Gewinde aufweisen, auf das eine Mutter geschraubt ist (nicht dargestellt). Ein Schraubenkopf 15 der Schraube beziehungsweise die nicht dargestellte Mutter bilden das Spannelement 5 des erfindungsgemäßen Befestigungselements 1.

Der Außenrand 8 der Lochscheibe 2 liegt auf einer Unterlegscheibe 16 und diese auf einem Anbauteil 17 auf, welches ein Durchgangsloch 21 aufweist, das ebenfalls von dem Schaft 3 durchgriffen wird. Das Anbauteil 17 wird von der Lochscheibe 2 gegen den Ankergrund 14 gespannt.

Wie erwähnt wird durch Drehen des Spannelements 5 eine Spannkraft in axialer Richtung des Schafts 3, also in Richtung der Längsachse L, erzeugt, die die Lochscheibe 2 axial zusammendrückt, die zwischen dem Spannelement 5 einerseits und der Unterlegscheibe 16, dem Anbauteil 17 und dem Ankergrund 14 andererseits eingespannt ist. Beim Zusammendrücken der Lochscheibe 2 liegt der das Spannelement 5 bildende Schraubenkopf 15 ausschließlich auf dem Auflager 11 der Lochscheibe 2 auf und berührt den Grundkörper 7 der Lochscheibe 2 nicht außerhalb des Auflagers 11.

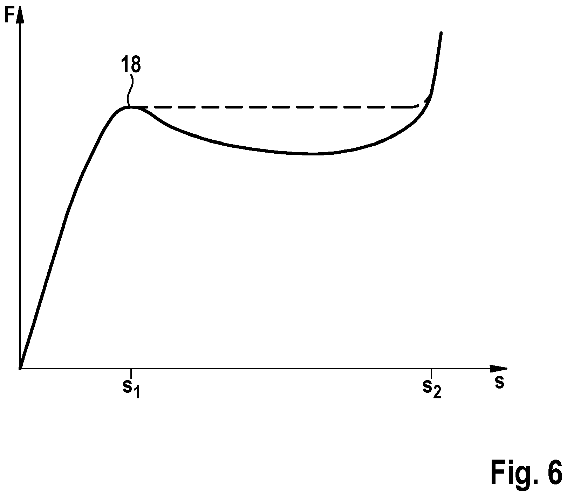

Die Spannkraft weist einen in Figur 6 dargestellten Verlauf auf. Das Diagramm zeigt die Spannkraft F über einen axialen Weg s des Spannelements 5, der zugleich auch ein Maß ist, um das die Lochscheibe 2 axial zusammengedrückt wird. Die Spannkraft F wirkt als Zugkraft im Schaft 3 und drückt die Lochscheibe 2 axial zusammen. Wie in Figur 6 zu sehen, steigt die Spannkraft F zunächst steil an, bis sie ein lokales Maximum 18 erreicht, von dem aus sie abfällt oder ein Plateau bildet (gestrichelt dargestellt), bevor sie wieder steil und über das lokale Maximum 18 ansteigt. Zwischen dem lokalen Maximum 18 und dem erneuten Ansteigen steigt die Spannkraft auch bei weiterer Verformung über einen Weg s₂ nicht über das Maximum 18 an, der größer ist, als der Weg s₁ bis zum Erreichen des Maximums 18. Das Maximum 18 ist die vorgesehene planmäßige Spannkraft, die erst nach Erreichen einer maximalen planmäßigen Verformung der Lochscheibe, die dem Weg s₁+s₂ entspricht, überschritten wird. Der dargestellte Verlauf der Spannkraft ist vorteilhaft für die Lochscheiben der erfindungsgemäßen Befestigungselemente, unabhängig davon, wie die Lochscheiben im Detail gestaltet sind.

Zusammen mit dem Ankergrund 14, in dem in dem Ankerloch 13 der Spreizanker des Befestigungselements 1 verankert ist, bildet das erfindungsgemäße Befestigungselement 1 mit seiner Lochscheibe 2 eine erfindungsgemäße Befestigungsanordnung 19. Dabei bilden der Schraubenkopf 15, das Spannelement 5 und der Schraubenschaft beziehungsweise Ankerschaft den Schaft 3, der das Loch 4 der Lochscheibe 2 durchgreift. Wie erwähnt kann der Spreizanker anstelle der Schraube einen Ankerschaft mit einem Gewinde aufweisen, auf das eine Mutter geschraubt ist, die in diesem Fall das Spannelement 5 bildet (nicht dargestellt).

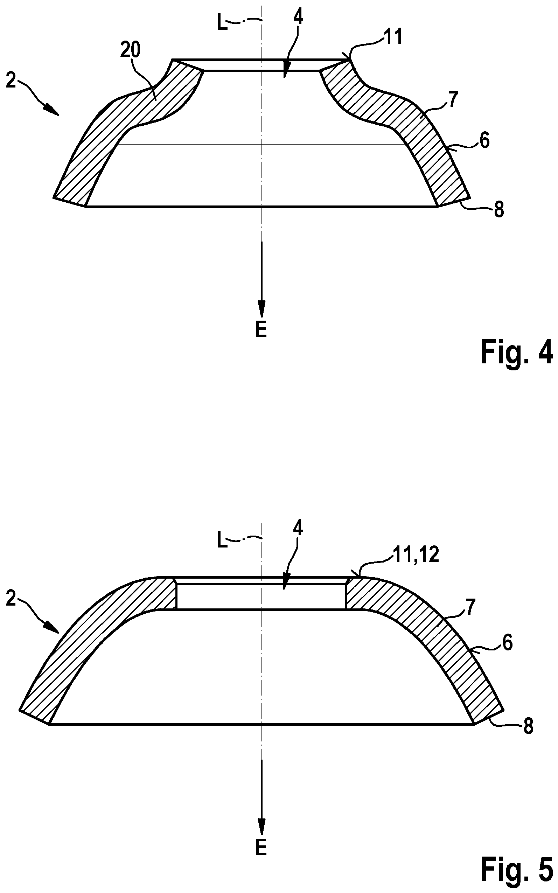

Bei der in Figur 4 gezeichneten Ausführungsform einer Lochscheibe 2 des erfindungsgemäßen Befestigungselements 1 geht die Wölbung der Lochscheibe 2 in einem das Loch 4 umgebenden Bereich in eine Gegenwölbung 20 über, so dass der Lochrand das Auflager 11 für das Spannelement 5 bildet. Die Gegenwölbung 20 weist eine der Wölbung der Lochscheibe 2 außerhalb der Gegenwölbung 20 entgegengesetzte Krümmung auf. Auch hier ist sichergestellt, dass das Spannelement 5 bei einem axialen Zusammendrücken der Lochscheibe 2 diese nicht außerhalb des das Auflager 11 bildenden Lochrandes berührt, wodurch sich auch hier der in Figur 6 gezeichnete Kraftverlauf ergibt.

Bei der in Figur 5 gezeichneten Ausführungsform einer Lochscheibe 2 des erfindungsgemäßen Befestigungselements 1 nimmt die Wölbung der Lochscheibe 2 radial vom Lochrand nach außen stetig ab, das Spannelement 5 liegt am Lochrand auf. Auch hier bildet der Lochrand und gegebenenfalls. der sich radial nach außen anschließende, das Loch 4 umschließende Bereich mit dem kleinen Wölbungsradius das Auflager 11 für das in Figur 5 nicht gezeichnete Spannelement 5. Auch bei dieser Ausführungsform ergibt sich durch die Formgebung der Lochscheibe 2 der in Figur 6 gezeichnete Kraftverlauf.

Die in Figuren 4 und 5 gezeichneten Lochscheiben 2 ersetzen bei Ausführungsformen der Erfindung die in Figur 1 gezeichnete Lochscheibe 2. Für diese Ausführungsformen gelten die Erläuterungen der Figuren 1 bis 3 und 6.

### Bezugszeichenliste

### Befestigungselement und Befestigungsanordnung

- E: Einbringrichtung
- F: Spannkraft
- L: Längsachse
- s: Axialweg
- 1: Befestigungselement
- 2: Lochscheibe
- 3: Schaft
- 4: Loch
- 5: Spannelement
- 6: Außenseite
- 7: Grundkörper
- 8: Außenrand
- 9: Aussparung
- 10: Kragen
- 11: Auflager
- 12: Auflagerfläche
- 13: Ankerloch
- 14: Ankergrund
- 15: Schraubenkopf
- 16: Unterlegscheibe
- 17: Anbauteil
- 18: lokales Maximum
- 19: Befestigungsanordnung
- 20: Gegenwölbung
- 21: Durchgangsloch

## Patentansprüche

1. Befestigungselement mit einem Schaft (3), einer gewölbten Lochscheibe (2) mit einem Loch (4), welches von dem Schaft (3) durchgriffen wird, und einem Spannelement (5), das auf einer Außenseite (6) der Lochscheibe (2) an dem Schaft (3) angeordnet ist, wobei die Lochscheibe (2) einen zweidimensional gewölbten Grundkörper (7) und ein Auflager (11) für das Spannelement (5) aufweist, das von der Außenseite (6) des Grundkörpers (7) absteht, **dadurch gekennzeichnet, dass** das Spannelement (5) bei einem Zusammendrücken der Lochscheibe (2) in der Achsrichtung des Schafts (3) mit dem Spannelement (5) ausschließlich auf dem Auflager (11) aufliegt, ohne die Außenseite (6) des Grundkörpers (7) der Lochscheibe (2) radial außerhalb des Auflagers (11) zu berühren.

2. Befestigungselement nach Anspruch 1, **dadurch gekennzeichnet, dass** sich das Auflager (11) an einem Lochrand des Lochs (4) der Lochscheibe (2) befindet.

3. Befestigungselement nach Anspruch 1 oder 2, **dadurch gekennzeichnet, dass** die Lochscheibe (2) einen ihr Loch (4) umschließenden und axial von dem Grundkörper (7) abstehenden Kragen (10) als Auflager (11) aufweist.

4. Befestigungselement nach Anspruch 1 oder 2, **dadurch gekennzeichnet, dass** die Lochscheibe (2) in einem das Loch (4) umschließenden Bereich eine Gegenwölbung (20) aufweist.

5. Befestigungselement nach Anspruch 1, **dadurch gekennzeichnet, dass** ausgehend von dem Lochrand die Lochscheibe (2) radial nach außen zunächst einen kleineren Wölbungsradius und mit radialem Abstand vom Lochrand einen größeren Wölbungsradius aufweist.

6. Befestigungselement nach einem oder mehreren der vorhergehenden Ansprüche, **dadurch gekennzeichnet, dass** die Lochscheibe (2) die Form einer Schicht eines Hohlkörpers aufweist.

7. Befestigungselement nach einem oder mehreren der vorhergehenden Ansprüche, **dadurch gekennzeichnet, dass** das Befestigungselement (1) einen Spreizanker aufweist.

8. Befestigungsanordnung mit einem Befestigungselement nach Anspruch 7, **dadurch gekennzeichnet, dass** der Spreizanker des Befestigungselements (1) in einem Ankerloch (13) in einem Ankergrund (14) verankert ist und ein Außenrand (8) der Lochscheibe (2) direkt oder indirekt an dem Ankergrund (14) anliegt, wobei der Schaft (3) einen Schraubenkopf (15) oder ein Gewinde, auf das eine Mutter geschraubt ist, aufweist, der/die bei einem Ausüben einer axialen Zugkraft auf den Schaft (3) durch Drehen des Schraubenkopfs (15) oder der Mutter ausschließlich auf dem Auflager (11) der Lochscheibe (2) aufliegt.
